# FASCICULE DE BREVET EUROPEEN

(11) **EP 3 889 762 B1**
(45) Date de publication et mention de la délivrance du brevet: **29.03.2023**
(21) Numéro de dépôt: 21157973.5
(22) Date de dépôt: 18.02.2021
(51) Int. Cl.: G06F 3/16, H04R 3/12, H04R 27/00

(54) **PROCÉDÉ DE GESTION D'AU MOINS UN GROUPE D'EQUIPEMENT DE RESTITUTION AUDIO**
VERFAHREN ZUR VERWALTUNG MINDESTENS EINER GRUPPE VON TONWIEDERGABEGERÄTEN
METHOD FOR MANAGING AT LEAST ONE GROUP OF AUDIO PLAYBACK EQUIPMENT

(30) Priorité: 01.04.2020 FR 2003261
(43) Date de publication de la demande: 06.10.2021
(73) Titulaire: SAGEMCOM BROADBAND SAS, 92500 Rueil-Malmaison (FR)
(72) Inventeur: BERGER, Jérôme, 92500 RUEIL MALMAISON (FR); BOUVIGNE, Gabriel, 92500 RUEIL MALMAISON (FR)
(74) Mandataire: Decorchemont, Audrey Véronique Christèle

(56) Documents cités:
- EP-A1- 3 286 759
- WO-A1-2016/033400
- US-A1- 2018 352 506

## Description

L'invention concerne le domaine de la restitution audio via un ou des équipements de restitution audio.

### ARRIERE PLAN DE L'INVENTION

Il est aujourd'hui très courant, dans les installations multimédia domestiques modernes, de connecter un équipement décodeur, de type boîtier décodeur STB à un ou plusieurs équipements de restitution audio.

En effet les équipements de restitution audio peuvent ainsi être employés pour diffuser simultanément un même flux audio et ainsi améliorer l'expérience acoustique de l'utilisateur. Par exemple, deux équipements de restitution audio peuvent être agencés dans des pièces différentes d'une habitation, la diffusion du flux audio de manière simultanée par lesdits équipements permettant à l'utilisateur de circuler entre les deux pièces sans interrompre son écoute.

Une telle installation nécessite toutefois de grouper les équipements de restitution audio afin de gérer cette diffusion simultanée du flux audio par des équipements de restitution audio différents. Il convient donc que l'utilisateur puisse facilement identifier les différents équipements de restitution audio afin de pouvoir les grouper comme il le souhaite.

A cet effet, il a été envisagé de s'appuyer sur le numéro de série de chaque équipement de restitution audio. En effet, le numéro de série est généralement imprimé sur une étiquette sous l'équipement de restitution audio ou sur sa face arrière, ce qui permet à l'utilisateur de le lire. Cependant cette étiquette est difficile d'accès lors de l'utilisation des équipements de restitution audio, ce qui complexifie l'identification pour l'utilisateur.

Il a aussi été envisagé de faire jouer à chaque équipement de restitution audio un son différent pour faciliter son identification. Malheureusement, là encore, une telle solution n'est pas employable en cours d'utilisation des équipements de restitution audio à moins d'interrompre temporairement la diffusion du flux audio.

Les documents US 2018/352506A1, WO2016/033400A1 et EP3286759A1 décrivent différents équipements de restitution audio ayant une interface d'identification lumineuse.

### OBJET DE L'INVENTION

Un but de l'invention est de proposer un procédé de gestion d'au moins un groupe d'équipement de restitution audio qui facilite l'identification du ou des équipements de restitution audio que ce soit lors d'une phase initiale de création du groupe mais également ultérieurement lors d'une phase d'utilisation dudit groupe.

### RESUME DE L'INVENTION

En vue de la réalisation de ce but, on propose selon l'invention un procédé selon la revendication 1. De la sorte, on s'appuie sur l'interface d'identification lumineuse du ou des équipements de restitution audio pour les identifier facilement que ce soit hors phase d'écoute

(par exemple lors d'une phase d'initialisation de création d'un groupe) ou que ce soit lors d'une phase d'écoute (par exemple pour intégrer un nouvel équipement de restitution audio à un groupe existant). En effet, le recours à l'interface d'identification lumineuse ne nuit pas à la restitution sonore d'un flux audio à diffuser par l'équipement de restitution audio.

Pour la présente invention, un groupe d'équipement de restitution audio peut potentiellement ne contenir qu'un unique équipement de restitution audio selon les demandes de configuration d'un utilisateur.

Optionnellement on sélectionne l'équipement de restitution audio en agissant directement sur ledit équipement de restitution audio.

Optionnellement on sélectionne l'équipement de restitution audio en agissant sur une interface graphique de commande. Optionnellement l'interface graphique de commande est distincte de l'équipement de restitution audio. Optionnellement le procédé comporte l'étape d'afficher un symbole qui est représentatif du motif lumineux et qui est donc associé à l'équipement de restitution audio correspondant.

Optionnellement on sélectionne l'équipement de restitution audio en sélectionnant le symbole par le biais de l'interface graphique.

Optionnellement le symbole est identique au motif lumineux qui lui est associé.

Optionnellement le symbole est similaire au motif lumineux qui lui est associé.

Optionnellement l'action consiste à agir sur le motif lumineux de l'équipement de restitution audio pour le modifier.

Optionnellement l'action consiste à faire diffuser un flux audio par l'équipement de restitution audio sélectionné. Optionnellement le procédé comporte l'étape supplémentaire d'enregistrer la sélection de l'utilisateur. Optionnellement le procédé comporte l'étape supplémentaire de faire afficher un motif lumineux temporaire par l'équipement de restitution audio lors de la sélection de l'utilisateur et avant validation par l'utilisateur de sa sélection.

L'invention concerne également un équipement de restitution audio comprenant une interface d'identification lumineuse permettant de mettre en œuvre au moins l'étape d'affichage du motif lumineux du procédé de la revendication 1.

Optionnellement l'interface d'identification lumineuse comporte au moins deux DELS.

Optionnellement l'interface d'identification lumineuse est agencée sur une face supérieure de l'équipement de restitution audio.

L'invention concerne également un programme d'ordinateur comprenant des instructions permettant d'exécuter le procédé de la revendication 1.

L'invention concerne également un support d'enregistrement lisible par ordinateur, sur lequel est enregistré le programme d'ordinateur tel que précité.

D'autres caractéristiques et avantages de l'invention ressortiront à la lecture de la description qui suit de mises en œuvre particulières non limitatives de l'invention.

### BREVE DESCRIPTION DES DESSINS

L'invention sera mieux comprise à la lumière de la description qui suit en référence aux figures annexées parmi lesquelles :
[Fig. 1] la figure 1 représente schématiquement une habitation dans laquelle est disposée une installation permettant de mettre en oeuvre l'invention ;
[Fig. 2] la figure 2 est une vue de dessus d'un équipement de restitution audio de l'installation représentée à la figure 1 ;
[Fig. 3] la figure 3 illustre à titre indicatif non limitatif différents motifs lumineux pouvant être affichés via l'équipement représenté à la figure 2 ;
[Fig. 4] la figure 4 représente schématiquement les différentes étapes d'une première mise en oeuvre de l'invention par l'installation représentée à la figure 1 ;
[Fig. 5] la figure 5 donne un exemple d'ordre pour la mise en oeuvre d'une des étapes représentées schématiquement à la figure 4 ;
[Fig. 6] la figure 6 représente schématiquement les différentes étapes d'une deuxième mise en oeuvre de l'invention par l'installation représentée à la figure 1 ;
[Fig. 7] la figure 7 illustre le dessus de deux équipements de restitution audio appartenant à un même groupe et participant à la deuxième mise en oeuvre symbolisée à la figure 6 ;
[Fig. 8] la figure 8 représente schématiquement les différentes étapes d'une troisième mise en oeuvre de l'invention par l'installation représentée à la figure 1 ;
[Fig. 9] la figure 9 représente schématiquement les différentes étapes d'une quatrième mise en oeuvre de l'invention par l'installation représentée à la figure 1.

### DESCRIPTION DETAILLEE DE L'INVENTION

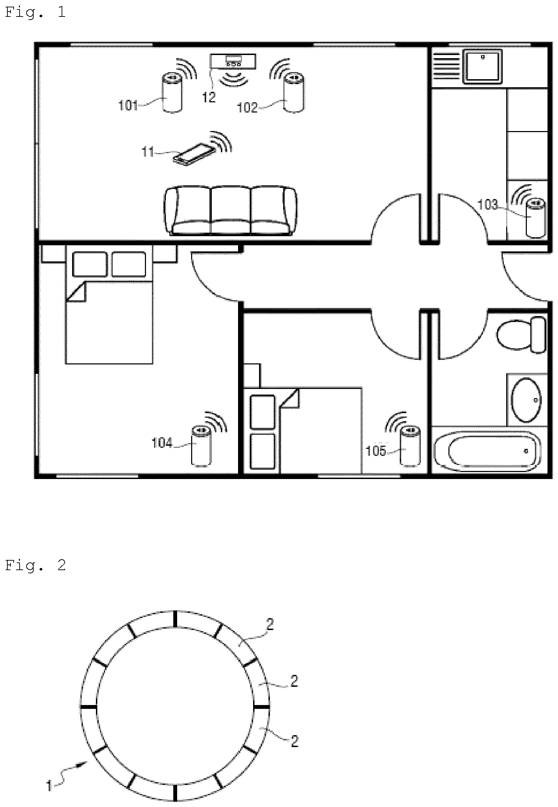

En référence à la figure 1, un exemple d'installation pouvant mettre en oeuvre l'invention va être à présent décrit.

L'installation est implantée dans une habitation d'un utilisateur et comprend ici une source audio telle qu'un équipement décodeur 12 ainsi qu'au moins deux équipements de restitution audio. Par ailleurs, l'installation comporte également un appareil 11 mobile qui peut être déplacé dans l'habitation, appareil 11 pourvu d'une interface graphique de commande d'au moins les équipements de restitution audio et de préférence de toute l'installation.

Dans le cas présent, l'installation comporte cinq équipements de restitution audio 101, 102, 103, 104, 105. Aucun équipement de restitution audio n'est par ailleurs ici compris dans l'équipement décodeur 12: ils forment chacun une entité distincte en communication avec l'équipement décodeur 12. Dans l'exemple décrit, une partie seulement de l'installation se trouve dans la même pièce. Typiquement l'équipement décodeur 12 est agencé dans le salon et entouré d'un côté, par un premier équipement gauche 101, et de l'autre par un deuxième équipement droit 102 (gauche et droite étant ici considéré pour l'utilisateur et non pour l'équipement décodeur 12). Le troisième équipement 103, le quatrième équipement 104 et le cinquième équipement 105 sont quant à eux agencés dans respectivement une deuxième pièce, une troisième pièce et une quatrième pièce.

L'équipement décodeur 12 est ici un boîtier décodeur, les équipements de restitution audio sont des enceintes externes audit boîtier décodeur et connectée audit boitier. Quant à l'appareil 11, il s'agit ici d'un téléphone portable intelligent (ou « smartphone »), l'interface graphique de commande étant l'écran tactile dudit téléphone portable intelligent.

En outre, comme illustré à la figure 2, chaque équipement de restitution audio est muni d'une interface d'identification lumineuse 1 qui est par exemple agencée sur la face supérieure de l'équipement de restitution audio concernée (soit la face opposée à celle sur laquelle l'équipement de restitution audio repose sur le sol ou sur un support de type meuble).

Ladite interface d'identification lumineuse 1 comporte un ou plusieurs éléments lumineux 2 (dont une partie seulement est référencée) de type diodes électroluminescentes (DEL). Ainsi, l'interface d'identification lumineuse 1 comporte plusieurs DELs. Par exemple l'interface d'identification lumineuse 1 comporte entre 8 et 18 DEL et par exemple entre 10 et 15 DEL. Ici l'interface d'identification lumineuse 1 comporte 12 DEL.

Dans le cas présent les DEL dessinent conjointement une figure en forme d'anneau qui est donc agencée sur la face supérieure de l'équipement de restitution audio concerné. Chaque DEL peut être configurée, indépendamment des autres DEL de la même interface d'identification lumineuse 1, pour n'afficher qu'une seule couleur ou peut être configurée pour être capable d'afficher plusieurs couleurs (ce qui est par exemple possible avec une DEL RVB ; pour « Rouge, Vert, Bleu »).

En service, l'équipement décodeur 12 acquiert un flux ou des flux audio d'entrée qui peuvent provenir d'un ou de plusieurs réseaux de diffusion. Les réseaux de diffusion peuvent être de source diverse : satellite, câble, IP, TNT (réseau de Télévision Numérique Terrestre), connexion internet, etc. En variante ou en complément, l'équipement décodeur 12 comporte une zone mémoire dans laquelle sont stockés localement un ou plusieurs flux audio.

Chaque équipement de restitution audio est connecté à une sortie audio de l'équipement décodeur 12. Par « sortie audio », on entend une sortie sur laquelle l'équipement décodeur 12 applique au moins un flux audio pour mettre en oeuvre une restitution audio via (au moins) un équipement de restitution audio par exemple suite à un ordre correspondant de l'appareil 11. En conséquence, chaque équipement de restitution audio comporte des moyens de traitement qui lui sont propres pour traiter le flux audio transmis par l'équipement décodeur 12.

Le canal de communication entre l'équipement décodeur 12 et chaque équipement de restitution audio, par lequel circule le signal audio, est ici non filaire. Dans d'autres variantes, le canal de communication peut être de type filaire (par exemple Ethernet). Tout type de technologie peut être utilisé pour réaliser ce canal : optique, radioélectrique, etc. Le canal peut ainsi utiliser différents protocoles « informatiques » (par exemple en *Bluetooth,* UPnP, *Airplay, Chromecast,* Wifi, etc). Ainsi et selon une option non limitative, chaque équipement de restitution audio est connecté par un réseau local à l'équipement décodeur 12. Le réseau local est par exemple un réseau sans fil de type Wi-Fi (i.e. le canal de communication équipement décodeur - équipement de restitution audio est un lien Wi-Fi) . Selon une autre variante, le réseau local comporte un routeur Wi-Fi, l'équipement décodeur 12 est relié audit routeur Wi-Fi par une connexion filaire de type Ethernet, et/ou est connecté au routeur Wi-Fi par une connexion sans fil de type Wi-Fi, et le routeur Wi-Fi est connecté à chaque équipement de restitution audio par une connexion sans fil de type Wi-Fi.

De la même manière, l'appareil 11 peut communiquer avec l'équipement décodeur 12 et avec les équipements de restitution audio via des communications préférentiellement non filaires. Tout type de technologie peut être utilisé pour réaliser ces communications : optique, radioélectrique, etc. Ces communications peuvent ainsi utiliser différents protocoles « informatiques » (par exemple en *Bluetooth,* UPnP, *Airplay, Chromecast,* Wifi, etc). Ainsi et selon une option non limitative, l'appareil 11 est également connecté via le réseau local à l'équipement décodeur 12 et aux différents équipements de restitution audio.

On va à présent s'attacher à décrire la gestion des différents équipements de restitution audio de l'installation.

En effet, l'utilisateur peut désirer grouper certains équipements de restitution audio entre eux afin qu'ils jouent le même flux audio.

Par exemple, l'utilisateur peut désirer grouper le premier équipement 101 et le deuxième équipement 102 de telle sorte que le premier équipement 101 joue le canal de gauche et le deuxième équipement 102 joue le canal de droite d'un même premier flux audio stéréo transmis par l'équipement décodeur 12, les deux équipements 101, 102 jouant alors de manière synchronisée. Par exemple, l'utilisateur peut souhaiter grouper deux autres équipements 103 et 104 avec la paire stéréo 101, 102 de telle sorte que chaque équipement 103, 104 joue chacun l'intégralité du premier flux audio de manière synchronisée avec la paire stéréo 101, 102. Ainsi l'utilisateur peut se déplacer entre la première pièce, la deuxième pièce et la troisième pièce sans interruption de son écoute. Par exemple, l'utilisateur peut aussi choisir de laisser le cinquième équipement 105 indépendant des quatre autres équipements 101, 102, 103, 104 afin de jouer un deuxième flux audio dans la cinquième pièce, deuxième flux audio différent du premier flux audio. En variante, l'utilisateur peut choisir de :
- grouper le premier équipement 101 et le deuxième équipement 102 de telle sorte que le premier équipement 101 joue le canal de gauche et le deuxième équipement 102 joue le canal de droite d'un même premier flux audio stéréo transmis par l'équipement décodeur 12, les deux équipements 101, 102 jouant alors de manière synchronisée ;
- grouper le troisième équipement 103, le quatrième équipement 104 et le cinquième équipement 105 de sorte que ces trois équipements 103, 104, 105 jouent un même deuxième flux audio transmis par l'équipement décodeur 12, différent du premier flux audio, les trois équipements 103, 104, 105 jouant alors de manière synchronisée entre eux (mais indépendamment du premier équipement 101 et du deuxième équipement 102).

Dès lors, il est préférable de pouvoir aider l'utilisateur à identifier les différents équipements de restitution audio et leurs regroupements pour lui permettre de mieux les gérer.

En conséquence, lorsqu'un utilisateur requiert l'identification d'un groupe d'équipement de restitution audio, l'appareil 11 ordonne à chaque équipement de restitution audio d'afficher, via son interface d'identification lumineuse, un motif lumineux au moins caractéristique du groupe auquel appartient ledit équipement de restitution audio. Ce motif lumineux est ici créé par les DELS de l'équipement concerné. L'utilisateur peut ainsi aisément visualiser quels sont les groupes d'équipement de restitution audio et comment ils sont organisés dans l'habitation.

En outre, l'appareil 11 affiche sur l'interface graphique de commande, dans le cas présent, autant de symboles qu'il y a de motifs. Chaque symbole est identique au motif associé ou bien est similaire au motif associé.

Ainsi, l'utilisateur peut aisément sélectionner un ou des groupes d'équipements de restitution audio en tapant sur le symbole affiché sur l'interface graphique de commande correspondant au motif, et donc au groupe, associé.

En fonction de la sélection de l'utilisateur, un ou des ordres d'action peuvent être générés par l'appareil 11 à destination de l'équipement décodeur 12 et/ou d'un ou de plusieurs équipements de restitution audio, actions en relation avec le ou les groupes d'équipements de restitution audio sélectionnés.

La gestion des équipements de restitution audio s'avère ainsi simple et rapide pour l'utilisateur.

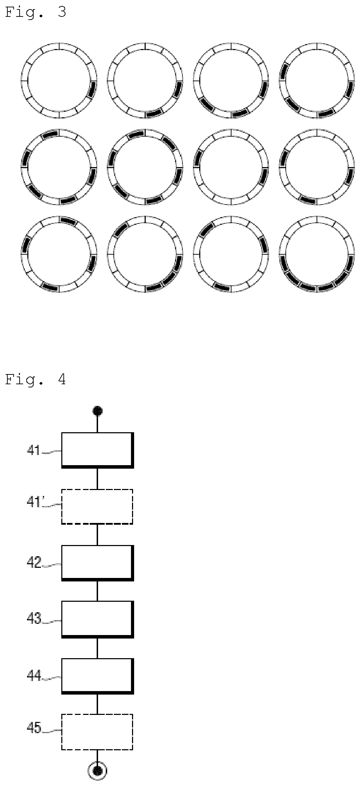

La figure 3 montre des exemples de motifs lumineux pouvant être affichés par les interfaces d'identification lumineuse 1. Les motifs peuvent par exemple être formés d'un segment de l'anneau, de deux segments opposés ou adjacents ou séparés de l'anneau, d'un segment sur deux sur une portion ou sur toute la circonférence de l'anneau

Les motifs peuvent être générés soit en ayant certaines DELs allumées et d'autres éteintes ou bien encore en ayant une partie des DELs d'une première couleur et une partie des DELs d'une deuxième couleur.

Les motifs peuvent par ailleurs être fixes, clignotants (par exemple par clignotement d'une ou plusieurs DELS) ou bien encore animés (par exemple le motif peut être formé d'une seule DEL allumée avec les DEL s'éclairant à tour de rôle une par une afin de provoquer l'illusion que le motif tourne le long de la circonférence de l'anneau).

Un motif est donc défini par sa forme et/ou sa couleur et/ou son clignotement et/ou son animation.

Les symboles reproduits sur l'interface graphique de commande peuvent alors exactement reproduire les motifs tels que ceux par exemple illustrés à la figure 3 (avec éventuellement les clignotements et/ou les animations correspondantes) ou bien être similaires mais non identiques auxdits motifs (par exemple reproduire la forme et/ou la couleur mais non le clignotement et/ou l'animation). Selon un autre exemple de symbole similaire mais non identique, si les équipements de restitution audio d'un même groupe se caractérisent par des motifs d'une même couleur (par exemple les motifs sont d'une couleur bleue) alors le symbole pourra être optionnellement une simple pastille bleue sans reproduire à l'identique le ou les motifs générés par les interfaces d'identification lumineuses du groupe considéré.

Ainsi, différentes configurations sont envisageables :
- définir un groupe pour chaque équipement de restitution audio, chaque groupe ne comportant ainsi qu'un seul équipement de restitution audio, et ordonner l'affichage de motifs différents par chaque groupe ce qui permet d'identifier individuellement chaque équipement de restitution audio ;
- ordonner l'affichage de motifs différents pour chaque groupe d'équipement de restitution audio, les équipements de restitution audio appartenant éventuellement à un même groupe affichant alors tous le même motif, ce qui permet d'identifier les différents groupes ;
- ordonner l'affichage de motifs différents pour chaque groupe d'équipement de restitution audio, les équipements de restitution audio appartenant éventuellement à un même groupe affichant alors tous une variation différente d'un même motif associé audit groupe ce qui permet d'identifier à la fois les différents groupes mais également les équipements de restitution audio de manière individuelle. Comme déjà indiqué, c'est l'appareil 11 qui transmet l'ordre d'affichage aux différents équipements de restitution audio. Un tel ordre peut être transmis via un protocole de commande tel qu'un protocole JSON-RPC ou bien encore un protocole CORBA.

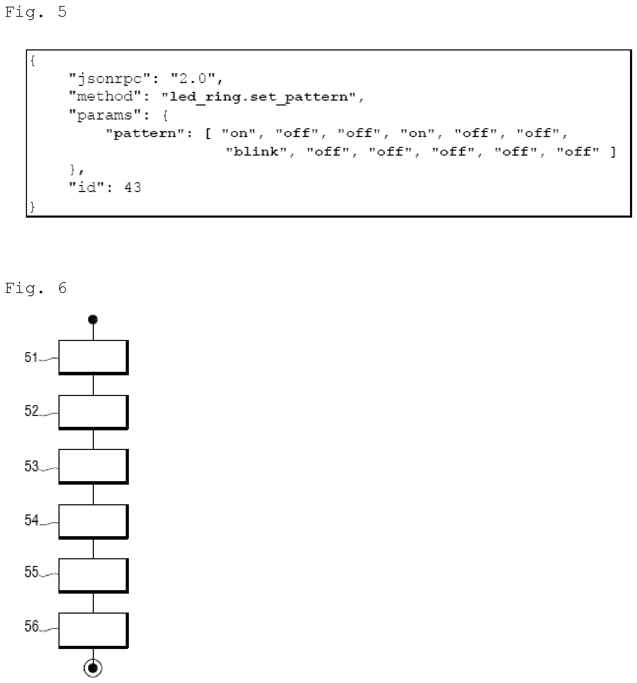

La figure 5 donne ainsi un exemple d'ordre d'affichage selon le protocole JSON-RPC envoyé par l'appareil 11 à un équipement de restitution audio. L'ordre d'affichage indique ici à chaque DEL de l'équipement de restitution audio quel doit être son état (parmi l'un des trois états suivants : allumé, éteint ou clignotant) ce qui permet à l'équipement de restitution audio de reproduire un motif particulier assurant l'identification dudit équipement et notamment de déterminer à quel groupe il appartient.

Par exemple, chaque équipement de restitution audio d'un même groupe peut afficher le motif caractéristique dudit groupe avec au moins une de ses DELS clignotante (la DEL clignotante variant alors d'un équipement de restitution audio à un autre au sein d'un même groupe) et/ou chaque équipement de restitution audio d'un même groupe pouvant afficher le motif caractéristique dudit groupe avec au moins une de ces DELS d'une autre couleur que celles des autres DELS (la couleur de cette DEL isolée variant alors d'un équipement de restitution audio à un autre et/ou la position de cette DEL isolée vis-à-vis du reste de l'anneau variant alors d'un équipement de restitution audio à un autre) et/ou chaque équipement de restitution audio d'un même groupe pouvant afficher une forme de motif différente mais avec une couleur caractéristique dudit groupe (la couleur variant d'un groupe à un autre et la forme du motif variant d'un équipement à un autre) et/ou chaque équipement de restitution audio d'un même groupe pouvant afficher une forme de motif différente mais avec un clignotement et/ou une animation caractéristique dudit groupe (le clignotement et/ou l'animation variant d'un groupe à un autre et la forme du motif variant d'un équipement à un autre).

On va à présent s'attacher à décrire des exemples non limitatifs d'ordres d'action pouvant être générés par l'appareil à destination de l'équipement décodeur et/ou d'un ou de plusieurs équipements de restitution audio, actions en relation avec le ou les groupes d'équipements de restitution audio sélectionnés par l'utilisateur. Optionnellement, c'est l'utilisateur qui choisit quelle(s) action(s) il souhaite réaliser optionnellement à partir d'un menu général affiché sur l'interface graphique de commande. Le menu général présente par exemple une liste de différentes actions possibles (création d'un nouveau groupe d'au moins deux équipements de restitution audio, modification d'un groupe existant, affectation/changement d'un rôle particulier à un équipement de restitution audio d'un groupe existant, lecture d'un flux audio par un groupe d'équipement, etc.). Ainsi si l'utilisateur clique sur l'une de ces actions, l'appareil met alors en oeuvre différentes étapes permettant de réaliser cette action. En référence à la figure 4, une première action possible est la création d'un nouveau groupe d'au moins deux équipements de restitution audio.

À cet effet, au cours d'une première étape 41, l'appareil 11 détermine les équipements de restitution audio présents sur le réseau local et construit une liste correspondante, liste pouvant optionnellement déjà intégrer quels sont les groupes d'équipement de restitution audio déjà existants. À cet effet, l'appareil 11 peut mettre en oeuvre divers protocoles. Par exemple l'appareil 11 peut avoir recours à un protocole de type mDNS (pour « multicast DNS ») qui prévoit que chaque équipement de restitution audio envoie régulièrement des messages « multicast » (donc recevables par tous les périphériques connectés au réseau local à savoir dans le cas présent l'appareil 11, les équipements de restitution audio et l'équipement décodeur 12) pour annoncer sa disponibilité : l'appareil 11 peut ainsi écouter ces messages et construire facilement une liste des équipements de restitution audio présents sur le réseau local. Typiquement l'appareil 11 est muni de moyens de traitement équipés d'un logiciel « Bonjour » ou « Avahi » qui permet d'implémenter un tel protocole mDNS.

En variante ou en complément, l'appareil 11 peut mettre en oeuvre d'autres protocoles pour déterminer quels équipements de restitution audio sont disponibles comme par exemple un protocole UPnP, où les équipements signalent aussi leur présence par le biais de messages de type ssdp:alive, éventuellement en réponse à une recherche d'équipements initiée par l'appareil 11 lui-même, telle que via un message M-SEARCH.

Au cours d'une deuxième étape 42, l'appareil 11 affecte un groupe pour chaque équipement de restitution audio qui ne fait pas déjà partie d'un groupe, chaque nouveau groupe ne comportant ainsi qu'un seul équipement de restitution audio. Par ailleurs, l'appareil 11 affecte un motif lumineux différent à chaque groupe (nouveaux et déjà existants) et envoie à chaque groupe l'ordre d'afficher le motif lumineux correspondant via son interface d'identification graphique 1.

Lors d'une troisième étape 43, l'appareil 11 provoque l'affichage sur son interface graphique de commande des symboles correspondants aux différents motifs lumineux des équipements de restitution audio.

Ceci permet à l'utilisateur de bien identifier chaque équipement de restitution audio qui est isolé (car seul dans son groupe) ce qui lui permet plus facilement de sélectionner le ou les symboles correspondants aux équipements de restitution audio à regrouper.

Lors d'une quatrième étape 44, lorsque l'utilisateur valide sa sélection, l'appareil 11 crée un nouveau groupe avec les équipements de restitution audio dont les symboles sont sélectionnés.

Lors d'une cinquième étape 45, optionnellement, l'appareil 11 envoie à tous les équipements de restitution audio dudit nouveau groupe l'ordre d'afficher un même motif représentatif dudit groupe créé. Ce motif peut être celui déjà attribué à l'un des équipements de restitution audio dudit nouveau groupe au cours de la deuxième étape 42 et que les autres équipements de restitution audio du même nouveau groupe copient ou peut être un tout autre motif. Ainsi l'utilisateur peut créer facilement un groupe d'équipements de restitution audio mais également peut aisément visualiser plus tard ce groupe puisque tous les équipements de restitution audio afficheront un même motif. Selon une variante de cette première action, on intercale une étape supplémentaire 41' entre la première étape 41 et la deuxième étape 42. Cette étape supplémentaire 41' consiste pour l'appareil 11 à retirer de la liste tous les équipements de restitution audio déjà présents dans un groupe existant. Les autres étapes sont adaptées en conséquence.

De la sorte, l'utilisateur peut plus facilement créer son nouveau groupe puisque le nombre de symboles affichés sur l'interface graphique de commande est ainsi plus limité. En référence à la figure 6, une deuxième action possible est l'affectation de rôles différents à au moins deux équipements de restitution audio appartenant à un même groupe. Par exemple ceci permet de définir une paire stéréo d'équipements de restitution audio en affectant à un premier équipement de restitution audio d'un groupe donné le canal de gauche d'un flux audio stéréo et à un deuxième équipement de restitution audio du même groupe le canal de droite du même flux. De manière plus générale, on peut ainsi affecter les différentes voies d'un système multicanaux de type 3.1 ou 5.1 à différents équipements de restitution audio d'un même groupe.

À cet effet lors d'une première étape 51, l'appareil 11 détermine les équipements de restitution audio appartenant à un même groupe. Cette première étape 51 est identique à ce qui a été dit pour la première étape 41 avec éventuellement une variante de suppression d'au moins les groupes ne comprenant qu'un seul équipement de restitution audio isolé voire de suppression de tous les groupes à l'exception d'un seul groupe comprenant au moins deux équipements de restitution audio (par exemple un groupe enregistré comme principal tel que le groupe d'équipement de restitution audio présent dans le salon de l'habitation).

À une deuxième étape 52, l'appareil 11 détermine pour chaque équipement de restitution audio du ou des groupes conservés si un rôle lui a déjà été attribué précédemment. Dans le cas contraire, l'appareil 11 lui affecte optionnellement un rôle arbitraire.

À une troisième étape 53, l'appareil 11 envoie à chaque équipement de restitution audio du ou des groupes conservés l'ordre d'afficher un motif représentatif du groupe associé. Si un rôle a déjà été attribué à l'un des équipements de restitution audio (soit précédemment soit de manière arbitraire à la deuxième étape 52) alors l'appareil 11 transmet un ordre d'afficher une variation dudit motif représentatif du groupe associé, variation elle-même représentative du rôle de l'équipement de restitution audio dans ledit groupe.

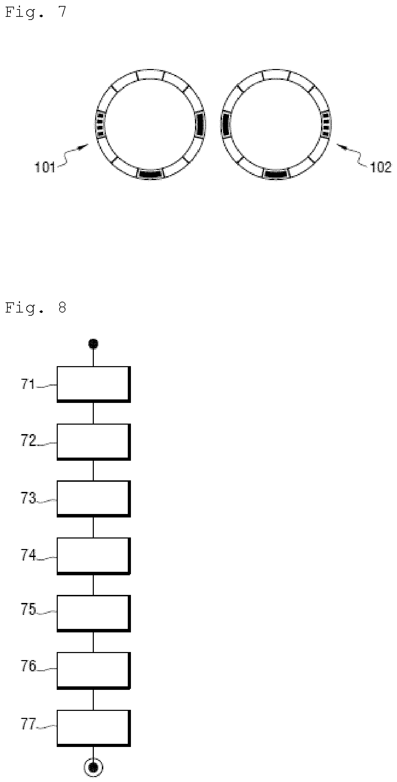

La figure 7 montre un exemple possible de variations d'un même motif utilisables pour identifier une paire stéréo d'équipements de restitution audio. Les deux équipements de restitution audio de la paire stéréo allument trois DEL avec une disposition en T (c'est-à-dire que deux DEL en vis-à-vis l'une de l'autre sont allumées ainsi qu'une DEL agencée entre lesdites deux DEL, les autres DEL étant éteintes) : cette disposition en T est le motif associé à leur groupe. En outre, l'équipement de restitution audio gauche 101 qui sera associé au canal de gauche fait clignoter la DEL de gauche et affiche en fixe les deux autres DEL, tandis que l'équipement de restitution audio de droite 102 associé au canal de droite fait clignoter la DEL de droite et affiche en fixe les deux autres DEL. Ce clignotement est donc une variation du motif associé au groupe pour lequel les trois DEL sont fixes.

On retient donc que l'identification de l'appartenance à un groupe peut être combinée avec l'identification de son rôle au sein dudit groupe.

Ceci s'avère notamment pratique lorsque les équipements de restitution audio droite et gauche sont une paire stéréo dans un groupe dont fait également partie un troisième équipement de restitution audio en tant qu'équipement monophonique. Il suffit en effet d'associer le motif en T au troisième équipement de restitution audio du groupe (qui n'a ainsi pas de rôle particulier) et le motif en T clignotant aux équipements de restitution audio droit et gauche.

Selon un autre exemple, l'équipement de restitution audio droit peut allumer un segment droit en bleu, l'équipement de restitution audio gauche un segment gauche en bleu tandis que le troisième équipement de restitution audio allume tout son anneau en bleu. Le motif associé au groupe est donc l'anneau complet en bleu et les variations dudit motif l'allumage d'une partie seulement de l'anneau.

À une quatrième étape 54, l'appareil 11 provoque l'affichage sur son interface graphique de commande des symboles associés au moins aux équipements de restitution audio du ou des groupes conservés.

A une cinquième étape 55, en cas de sélection de l'un de ces symboles par l'utilisateur par exemple dans un cadre de demande de changement de rôle de l'équipement de restitution audio associé, l'appareil 11 envoie à l'équipement concerné l'ordre d'afficher le motif ou la variation correspondant à son nouveau rôle. Par exemple, en cas d'inversion des rôles des équipements de restitution audio droit et gauche, l'appareil 11 ordonne le changement de la DEL clignotante pour chacun desdits équipements.

On peut ainsi affecter facilement un même rôle à plusieurs équipements de restitution audio différents : il suffit en effet à l'utilisateur lors de la cinquième étape de sélectionner plusieurs symboles.

À une sixième étape 56, lorsque l'utilisateur valide la nouvelle configuration, l'appareil 11 enregistre les rôles de chaque équipement de restitution audio au sein du groupe considéré.

Selon une première variante, l'appareil 11 peut attendre la validation de la configuration de l'utilisateur avant d'ordonner le changement de motif ou de variation de motif correspondant au nouveau rôle attribué à un équipement de restitution audio comme ce qui a été proposé pour la première action. En variante, également on peut de la même façon pour la première action, demander la modification des motifs (ou des variations de motifs) dès la sélection par l'utilisateur et avant même sa validation de la nouvelle configuration comme ce qui a été proposé ici pour la deuxième action.

La figure 8 propose une deuxième variante pour mettre en oeuvre la deuxième action.

Les quatre premières étapes 71, 72, 73, 74 sont identiques à ce qui a été dit précédemment pour les quatre premières étapes 51, 52, 53, 54.

En revanche à la cinquième étape 75, l'utilisateur ne sélectionne pas directement l'un des symboles en appuyant sur l'écran tactile, c'est-à-dire en agissant sur l'appareil 11, mais sélectionne les symboles indirectement en agissant directement sur le ou les équipements de restitution audio. Par exemple, l'utilisateur appuie sur un ou des boutons de l'équipement de restitution audio visé. En variante on ne met pas ici en oeuvre la quatrième étape d'affichage des symboles.

Suite à cela, l'équipement de restitution audio concerné transmet une notification à l'appareil 11.

On peut ainsi affecter facilement un même rôle à plusieurs équipements de restitution audio différents : il suffit en effet à l'utilisateur lors de la cinquième étape 75 de sélectionner le même motif en appuyant sur plusieurs équipements de restitution audio.

Lors d'une sixième étape 76, l'appareil 11 envoie alors à l'équipement concerné l'ordre d'afficher le motif ou la variation correspondant à son nouveau rôle. Par exemple, en cas d'inversion des rôles des équipements de restitution audio droit et gauche, l'appareil 11 ordonne le changement de la DEL clignotante pour chacun desdits équipements.

À une septième étape 77, lorsque l'utilisateur valide la nouvelle configuration, l'appareil 11 enregistre les rôles de chaque équipement de restitution audio au sein du groupe considéré.

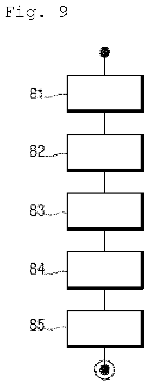

En référence à la figure 9, une troisième action possible est la lecture d'un flux audio par plusieurs équipements de restitution audio différents.

À cet effet lors d'une première étape 81, l'appareil 11 détermine les groupes d'équipements de restitution audio disponibles. Cette première étape 81 est par exemple identique à celle 41 de la première action.

À une deuxième étape 82, l'appareil 11 envoie à chaque équipement de restitution audio l'ordre d'afficher un motif (ou une variation de motif) représentatif du groupe associé.

À une troisième étape 83, l'appareil 11 provoque l'affichage sur son interface graphique de commande des symboles associés aux différents groupes.

Ceci permet à l'utilisateur de bien identifier les différents groupes ce qui lui permet plus facilement de sélectionner le ou les symboles correspondants au(x) groupe(s) devant jouer un même flux audio.

Lors d'une quatrième étape 84, lorsque l'utilisateur valide sa sélection, l'appareil 11 enregistre la sélection de l'utilisateur.

À une cinquième étape 85, l'appareil 11 envoie ainsi à l'équipement décodeur 12 un ordre d'activation contenant la liste du ou des groupes activés afin que l'équipement décodeur 12 envoie le flux audio correspondant vers les équipements de restitution audio dudit ou desdits groupes activés.

On a vu ici que l'installation permettait de commander des actions dont les exemples précités ne sont pas limitatifs. Bien entendu, l'invention n'est pas limitée aux mises en oeuvre et modes de réalisation décrits ci-dessus et on pourra y apporter des variantes de réalisation sans sortir du cadre de l'invention.

Ainsi, bien qu'ici l'équipement décodeur soit un boîtier décodeur, l'équipement décodeur pourra être tout équipement capable de réaliser un décodage audio, tel qu'un décodeur audio/vidéo, un décodeur vidéonumérique et par exemple une console de jeu, un ordinateur, une *smart*-TV, une tablette numérique, un téléphone portable, un décodeur de télévision numérique, un boîtier décodeur STB, etc. De manière générale, bien qu'ici la source audio soit un équipement décodeur, la source audio pourra être tout autre équipement capable de fournir un flux audio aux équipements de restitution audio tel qu'une chaîne Hi-Fi numérique. Bien qu'ici la source audio et l'appareil soit distincts, la source et l'appareil pourront faire partie d'un même ensemble unitaire. Ainsi, cela pourra être directement l'appareil qui transmette un flux audio à au moins l'un des équipements de restitution audio. Par exemple, la source audio pourrait être une application mise en oeuvre dans un appareil de type smartphone. De même, la source audio et l'interface graphique de commande pourront être intégrées dans un même décodeur STB, ainsi l'interface graphique de commande est affichée sur la télévision et contrôlée par la télécommande du décodeur STB.

De même bien qu'ici la source audio soit distincte de tous les équipements de restitution audio, la source audio et au moins l'un des équipements de restitution audio pourront ne pas être distincts et faire partie d'un même ensemble unitaire. Cela sera par exemple le cas si le ou les équipements de restitution audio traitent des flux audio directement en provenance d'un réseau externe de type Internet. On pourra ainsi avoir un ou des équipements de restitution audio qui seront des équipements de restitution audio intelligents (tels que des enceintes connectées encore appelées « smartspeakers ») pouvant ainsi fonctionner sans équipement décodeur car intégrant directement les capacités d'accès à la source audio, ces équipements diffusant un flux audio directement en provenance d'un réseau externe de type Internet, ou directement en provenance d'un réseau local.

De même bien qu'ici l'appareil soit distinct de tous les équipements de restitution audio, l'appareil et au moins l'un des équipements de restitution audio pourront ne pas être distincts et faire partie d'un même ensemble unitaire. Dans un même ensemble unitaire, on pourra ainsi avoir au moins un appareil, un équipement de restitution audio et une source audio qui ne seront donc pas distincts. L'installation pourra également comporter plusieurs sources audio et/ou plusieurs appareils sachant que les sources audio, les appareils, les équipements de restitution audio pourront être couplés entre eux dans un ou plusieurs ensemble unitaires.

Bien qu'ici l'appareil soit un téléphone portable, l'appareil pourra être tout autre élément muni ou lié à une interface graphique de commande. L'appareil pourra ainsi être de natures variées : appareil dédié, téléphone portable ou tablette exécutant une application dédiée, ordinateur exécutant une application dédiée, ou appareil tiers (console de jeux, décodeur de télévision numérique, smart TV...) ayant une fonctionnalité dédiée ou exécutant une application dédiée.

On pourra interagir avec l'interface graphique de commande soit directement par appui tactile sur ladite interface soit indirectement à l'aide d'un élément de commande de type télécommande, joystick, stylet, clavier, souris ... Ainsi on pourra sélectionner le symbole soit directement soit indirectement.

L'invention pourra s'affranchir d'un affichage sur une interface graphique de commande. Par exemple, à une phase initiale, chaque équipement de restitution audio pourra afficher un motif différent par défaut. L'utilisateur pourra alors appuyer sur un bouton de l'équipement de restitution audio pour le sélectionner et modifier le motif affiché. Si l'utilisateur modifie le motif jusqu'à tomber sur un motif déjà affiché par un autre équipement de restitution audio alors les deux équipements se retrouvent groupés. Les équipements de restitution audio affichant ainsi le même motif constitueront un groupe et joueront la même chose.

Par ailleurs, bien qu'ici l'équipement de restitution audio soit une enceinte connectée externe, ceci pourrait être un autre équipement muni d'un haut-parleur, par exemple une enceinte non connectée, une barre de son, un système audio relié à un bridge Wi-Fi/audio ... à condition que l'équipement de restitution audio comporte une interface d'identification lumineuse. On considérera que les équipements de restitution audio ayant le même motif (aux variantes près) consistent conjointement un groupe.

Les éléments lumineux pourront présenter d'autres formes d'agencements que celles décrites comme par exemple un agencement matriciel, un agencement en colonne ... Les éléments lumineux pourront être placés ailleurs que sur le dessus de l'équipement de restitution audio comme par exemple sur la face avant de l'équipement ou encore sous le tissu recouvrant une partie de l'équipement de restitution audio. On pourra ainsi avoir un agencement d'éléments lumineux sous forme de deux colonnes sur les deux côtés latéraux d'une face avant de l'équipement ou bien encore un arrangement matriciel possiblement placé sous le tissu acoustique.

On pourrait avoir un nombre plus important d'équipements de restitution audio et/ou de source audio et/ou d'appareils et/ou d'interface graphique de commande que ce qui a été indiqué.

Les différentes communications évoquées pourront être filaires en place d'être non filaires.

On pourra transmettre les ordres entre l'appareil et les équipements de restitution audio soient directement soit indirectement en passant par la source audio. On pourra aussi transmettre les ordres entre la source audio et les équipements de restitution audio soit directement soit indirectement en passant par l'appareil.

Le motif lumineux pourra rester en permanence affiché sur les équipements de restitution audio. Ainsi, il sera par exemple intuitif pour l'utilisateur de se souvenir que des équipements de restitution audio affichant un motif bleu font partie du même groupe alors qu'un autre équipement de restitution audio affichant un motif orange est seul dans son groupe, et qu'encore un autre équipement de restitution audio affichant un motif vert est également seul dans son groupe.

En variante, le motif lumineux ne sera plus affiché une fois que l'utilisateur aura validé une configuration (immédiatement ou après un intervalle de temps donné) ou sera affiché avec une intensité réduite dès que l'utilisateur aura validé une configuration donnée (immédiatement ou après un intervalle de temps donné). Indépendamment des validations de l'utilisateur, on pourra également ne plus afficher le motif ou l'afficher avec une intensité réduite ou non réduite en cas de mise en veille de l'équipement de restitution audio concerné.

De préférence, indépendamment des validations de l'utilisateur et de la mise en veille ou de l'équipement, on pourra également ne plus afficher le motif ou l'afficher avec une intensité réduite ou non réduite en cas de lecture d'un flux audio par l'équipement de restitution audio concerné.

Également, même s'il a été indiqué ici que l'appareil ordonnait au début de chaque action aux équipements de restitution audio d'afficher un motif, cette étape pourra ne pas être mise en oeuvre via l'appareil. Par exemple l'affichage du motif au début de chaque action pourra être permanente ou bien encore être automatique. L'affichage automatique pourra être déclenché de multiple manière par exemple lorsqu'un playback a lieu et/ou:
- lorsque l'utilisateur appuie sur l'un des équipements de restitution audio, et/ou
- lorsque l'utilisateur appuie sur l'interface graphique de commande, et/ou
- lorsque la lecture d'un contenu audio est démarrée par tout autre moyen que l'appareil, tel que par exemple une commande envoyée par le réseau LAN ou WAN, et/ou
- lorsqu'un ordre de manière général est reçu par l'équipement de restitution audio via tout autre moyen que l'appareil, tel que par exemple une commande envoyée par un réseau.

Par ailleurs, au début de l'implantation d'une action donnée, on pourra identifier de nouveau l'intégralité des équipements de restitution audio disponibles ou bien repartir d'une liste d'équipements et/ou de groupes disponibles déjà effectuée et conservée en mémoire dans l'installation (par exemple au niveau de la source et/ou de l'appareil et/ou d'au moins l'un des équipements de restitution audio), liste que l'on pourra éventuellement mettre à jour pour les nouveaux équipements de restitution audio intégrés à l'installation.

Par ailleurs, au début de chaque implémentation d'action, on pourra affecter un motif aléatoire aux équipements de restitution audio disponibles ou bien partir d'une liste d'affectation motif - équipement déjà effectuée et conservée en mémoire dans l'installation (par exemple au niveau de la source et/ou de l'appareil et/ou d'au moins l'un des équipements de restitution audio), liste que l'on pourra éventuellement mettre à jour pour les nouveaux équipements de restitution audio intégrés à l'installation. Dans ce cas, lorsque l'utilisateur requerra une nouvelle action, les équipements de restitution audio ayant déjà un motif affecté, afficheront directement ledit motif.

Comme déjà indiqué on pourra sélectionner les symboles affichés sur l'interface graphique de commande soit en interagissant directement avec ladite interface (en appuyant dessus ou par l'intermédiaire d'un élément de commande) soit en interagissant indirectement avec ladite interface par interaction avec les équipements de restitution audio (sélection d'un bouton typiquement sur le ou les équipements concernés) et transmission d'un message entre ledit équipement et ladite interface graphique de commande.

Optionnellement, pour n'importe laquelle des actions envisagées, on peut insérer une étape supplémentaire de visualisation d'une sélection d'un ou plusieurs groupes et/ou équipements de restitution audio par l'utilisateur. Par exemple chaque fois que l'utilisateur ajoute ou retire un symbole de sa sélection, l'appareil envoie alors à l'équipement de restitution audio et/ou au groupe correspondant un ordre de modification temporaire du motif affiché par le ou les équipements concernés. Par exemple, lorsque l'utilisateur sélectionne un symbole l'appareil envoie à l'équipement de restitution audio et/ou au groupe correspondant l'ordre de faire clignoter le motif déjà affiché par le ou les équipements de restitution audio et/ou lorsque l'utilisateur retire un symbole de la sélection l'appareil envoie à l'équipement de restitution audio et/ou au groupe correspondant l'ordre d'arrêter de faire clignoter le motif ; et ce tant que l'utilisateur n'a pas validé sa sélection. Alternativement, chaque fois que l'utilisateur sélectionne ou désélectionne un symbole, l'appareil envoie à l'équipement de restitution audio et/ou au groupe correspondant l'ordre de faire clignoter le motif affiché un nombre limité de fois (par exemple deux ou trois fois).

Une telle étape optionnelle peut par exemple être intercalée entre la troisième étape et la quatrième étape de l'implémentation de la première action, au niveau de la cinquième étape de l'implémentation de la deuxième action, entre la troisième étape et la quatrième étape de l'implémentation de la troisième action ...

On pourra afficher autant de symboles qu'il y a d'équipements de restitution audio ou moins de symboles ou plus de symboles. On pourra par exemple afficher autant de symboles qu'il y a de groupes, un seul symbole étant alors associé à plusieurs équipements de restitution audio du même groupe.

D'autres actions que celles décrites pourront être mises en oeuvre comme par exemple l'intégration d'un nouvel équipement de restitution audio à un groupe existant ou bien encore une reconfiguration totale de l'installation. On pourra par ailleurs pour chaque action modifier le symbole associé à un groupe donné ou à un équipement de restitution audio donné lorsque l'utilisateur modifie le rôle dudit équipement, l'organisation d'un groupe, crée un nouveau groupe ... afin de coordonner le nouveau motif (ou sa variation) associé audit groupe ou audit équipement de restitution audio à son symbole. Une telle modification du symbole peut se faire par exemple lors de la quatrième étape de l'implémentation de la première action, lors de la quatrième étape de l'implémentation de la deuxième action, lors de la troisième étape de l'implémentation de la troisième action ...

Bien entendu les différents modes de réalisation, mises en oeuvre, options ... décrites peuvent être mixées entre elles. Par exemple on pourra implémenter la première action en permettant un affichage de motifs avec variation comme pour la deuxième action.

## Revendications

1. Procédé de gestion d'un groupe d'équipement de restitution audio, comprenant au moins un équipement de restitution audio muni d'une interface d'identification lumineuse, et agencé pour diffuser un flux audio comportant au moins un canal audio, le procédé comportant les étapes de :
- afficher par l'interface d'identification lumineuse (1) de l'équipement de restitution audio un motif lumineux (2) au moins caractéristique du groupe auquel appartient ledit équipement,
le motif :
• étant défini par une forme et/ou un clignotement et/ou une animation,
et
• étant caractéristique d'un rôle de l'équipement au sein dudit groupe,
- en cas de sélection d'au moins l'un des équipements de restitution audio, effectuer une action en relation avec l'équipement de restitution audio associé,
le procédé comprenant par ailleurs l'étape d'afficher par les interfaces d'identification lumineuse d'équipements de restitution audio appartenant à un même groupe une variation différente d'un même motif associé audit groupe, la variation différente dudit motif ayant pour but, pour chaque équipement de restitution audio dudit groupe, de communiquer le rôle dudit équipement au sein dudit groupe, le rôle dudit équipement étant de diffuser un canal audio particulier du flux audio.

2. Procédé selon la revendication 1, dans lequel on sélectionne l'équipement de restitution audio en agissant directement sur ledit équipement de restitution audio.

3. Procédé selon l'une des revendications 1 à 2, dans lequel on sélectionne l'équipement de restitution audio en agissant sur une interface graphique de commande.

4. Procédé selon la revendication 3, dans lequel l'interface graphique de commande est distincte de l'équipement de restitution audio.

5. Procédé selon l'une des revendications 1 à 4, comprenant l'étape d'afficher un symbole qui est représentatif du motif lumineux et qui est donc associé à l'équipement de restitution audio correspondant.

6. Procédé selon la revendication 5, dans lequel on sélectionne l'équipement de restitution audio en sélectionnant le symbole par le biais de l'interface graphique.

7. Procédé selon l'une des revendications 5 ou 6 dans lequel le symbole est identique au motif lumineux qui lui est associé.

8. Procédé selon l'une des revendications 5 à 7, dans lequel le symbole est similaire au motif lumineux qui lui est associé.

9. Procédé selon l'une des revendications 1 à 8, dans lequel l'action consiste à agir sur le motif lumineux de l'équipement de restitution audio pour le modifier.

10. Procédé selon l'une des revendications 1 à 9, dans lequel l'action consiste à faire diffuser un flux audio par l'équipement de restitution audio sélectionné.

11. Procédé selon l'une des revendications 1 à 10, comportant l'étape supplémentaire d'enregistrer la sélection de l'utilisateur.

12. Procédé selon l'une des revendications 1 à 11, comportant l'étape supplémentaire de faire afficher un motif lumineux temporaire (2) par l'équipement de restitution audio lors de la sélection de l'utilisateur et avant validation par l'utilisateur de sa sélection.

13. Équipement de restitution audio comprenant une interface d'identification lumineuse permettant de mettre en œuvre au moins l'étape d'affichage du motif lumineux du procédé selon l'une des revendications 1 à 12.

14. Équipement selon la revendication 13, dans lequel l'interface d'identification lumineuse comporte au moins deux DELS.

15. Équipement selon la revendication 13 ou la revendication 14, dans lequel l'interface d'identification lumineuse est agencée sur une face supérieure de l'équipement de restitution audio.

16. Installation comprenant un équipement de restitution audio selon l'une des revendications 13 à 15, l'installation comprenant en outre un appareil comprenant une interface graphique de commande d'au moins ledit équipement de restitution audio.

17. Installation selon la revendication 16, dans laquelle l'appareil est un téléphone portable ou une tablette ou un ordinateur.

18. Programme d'ordinateur comprenant des instructions permettant d'exécuter le procédé selon l'une des revendications 1 à 12.

19. Support d'enregistrement lisible par ordinateur, sur lequel est enregistré le programme d'ordinateur selon la revendication 18.

## Patentansprüche

1. Verfahren zur Verwaltung einer Gruppe von Tonwiedergabegeräten, die mindestens ein Tonwiedergabegerät umfasst, das mit einer leuchtenden Identifikationsschnittstelle versehen und ausgebildet ist, einen Audiostrom abzuspielen, der mindestens einen Audiokanal umfasst, wobei das Verfahren die Schritte umfasst:
- Anzeigen eines Lichtmusters (2) mittels der leuchtenden Identifikationsschnittstelle (1) des Tonwiedergabegeräts, wobei das Lichtmuster zumindest charakteristisch für die Gruppe ist, zu der das genannte Gerät gehört,
wobei das Muster:
• durch eine Form und/oder ein Blinken und/oder eine Animation definiert ist
und
• charakteristisch für eine Rolle des Geräts innerhalb der genannten Gruppe ist,
- im Falle des Auswählens mindestens eines der Tonwiedergabegeräte, Ausführen einer Handlung in Bezug auf das dazugehörige Tonwiedergabegerät,
wobei das Verfahren darüber hinaus den Schritt des Anzeigens, mit Hilfe der leuchtenden Identifikationsschnittstellen der Tonwiedergabegeräte, die zu einer selben Gruppe gehören, einer anderen Variation desselben Musters umfasst, das mit der genannten Gruppe verbunden ist, wobei die andere Variation des genannten Musters für jedes Tonwiedergabegerät der genannten Gruppe zum Ziel hat, die Rolle des genannten Geräts innerhalb der genannten Gruppe zu kommunizieren, wobei die Rolle des genannten Geräts das Abspielen eines bestimmten Audiokanals des Audiostroms ist.

2. Verfahren nach Anspruch 1, bei dem man das Tonwiedergerät auswählt, indem man direkt auf das genannte Tonwiedergabegerät einwirkt.

3. Verfahren nach einem der Ansprüche 1 bis 2, bei dem man das Tonwiedergabegerät auswählt, indem man auf eine grafische Benutzeroberfläche einwirkt.

4. Verfahren nach Anspruch 3, bei dem die grafische Benutzeroberfläche von dem Tonwiedergabegerät getrennt ist.

5. Verfahren nach einem der Ansprüche 1 bis 4, umfassend den Schritt des Anzeigens eines Symbols, das repräsentativ für das Lichtmuster ist und das folglich mit dem entsprechenden Tonwiedergabegerät verbunden ist.

6. Verfahren nach Anspruch 5, bei dem man das Tonwiedergabegerät auswählt, indem man das Symbol über die grafische Benutzeroberfläche auswählt.

7. Verfahren nach einem der Ansprüche 5 oder 6, bei dem das Symbol mit dem Lichtmuster, das damit verbunden ist, identisch ist.

8. Verfahren nach einem der Ansprüche 5 bis 7, bei dem das Symbol dem Lichtmuster, das damit verbunden ist, ähnlich ist.

9. Verfahren nach einem der Ansprüche 1 bis 8, bei dem die Handlung darin besteht, auf das Lichtmuster des Tonwiedergabegeräts einzuwirken, um es zu ändern.

10. Verfahren nach einem der Ansprüche 1 bis 9, bei dem die Handlung darin besteht, das ausgewählte Tonwiedergabegerät zu veranlassen, einen Audiostrom abzuspielen.

11. Verfahren nach einem der Ansprüche 1 bis 10, umfassend den zusätzlichen Schritt des Speicherns der Auswahl des Nutzers.

12. Verfahren nach einem der Ansprüche 1 bis 11, umfassend den zusätzlichen Schritt des Veranlassens des Tonwiedergabegeräts ein temporäres Lichtmuster (2) während der Auswahl durch den Nutzer und vor der Validierung der Auswahl durch den Nutzer anzuzeigen.

13. Tonwiedergabegerät, umfassend eine leuchtende Identifikationsschnittstelle, die ein Durchführen mindestens des Schrittes des Anzeigens des Lichtmusters des Verfahrens nach einem der Ansprüche 1 bis 12 ermöglicht.

14. Gerät nach Anspruch 13, bei dem die leuchtende Identifikationsschnittstelle mindestens zwei LEDs umfasst.

15. Gerät nach Anspruch 13 oder Anspruch 14, bei dem die leuchtende Identifikationsschnittstelle auf einer oberen Fläche des Tonwiedergabegeräts ausgebildet ist.

16. Anlage, umfassend ein Tonwiedergabegerät nach einem der Ansprüche 13 bis 15, wobei die Anlage ferner eine Vorrichtung umfasst, die eine grafische Benutzeroberfläche zur Bedienung mindestens des genannten Tonwiedergabegeräts umfasst.

17. Anlage nach Anspruch 16, bei der die Vorrichtung ein tragbares Telefon oder ein Tablet oder ein Computer ist.

18. Computerprogramm, umfassend Anweisungen, die ein Ausführen des Verfahrens nach einem der Ansprüche 1 bis 12 ermöglichen.

19. Computerlesbarer Aufzeichnungsträger, auf dem das Computerprogramm nach Anspruch 18 gespeichert ist.

## Claims

1. A method of managing at least one audio playback equipment group comprising at least one piece of audio playback equipment provided with a light-emitting identification interface, and arranged for playing a sound playback of an audio stream comprising at least one audio channel, the method comprising the steps of:
- using the light-emitting identification interface (1) of the piece of audio playback equipment to display a light pattern (2) characteristic at least of the group to which said piece of equipment belongs,
the pattern:
• being defined by a shape, and/or by blinking, and/or by animation, and
• being characteristic of a role of the piece of equipment within said group;
- in the event of at least one of the pieces of audio playback equipment being selected, performing an action relating to the associated piece of audio playback equipment,
the method further comprising the step of using the light-emitting identification interfaces of pieces of audio playback equipment belonging to the same group to display different variations of a common pattern associated with said group, the different variations of said common pattern having for goal, for each pieces of audio playback equipment of said group, to communicate the role of said piece of audio playback equipment within said group, the role of said piece of audio playback equipment being to play a particular audio channel of the audio stream.

2. A method according to claim 1 to claim 2, wherein a piece of audio playback equipment is selected by acting directly on said piece of audio playback equipment.

3. A method according to claim 1 to claim 2, wherein a piece of audio playback equipment is selected by acting on a graphics control interface.

4. A method according to claim 3, wherein the graphics control interface is distinct from the audio playback equipment.

5. A method according to any one of claims 1 to 4, including a step of displaying a symbol that is representative of the light pattern and that is therefore associated with the corresponding piece of audio playback equipment.

6. A method according to claim 5, wherein a piece of audio playback equipment is selected by selecting the symbol by means of the graphics interface.

7. A method according to claim 5 or claim 6 wherein the symbol is identical to the light pattern with which it is associated.

8. A method according to any one of claims 5 to 7, wherein the symbol is similar to the light pattern with which it is associated.

9. A method according to any one of claims 1 to 8, wherein the action consists in acting on the light pattern of the piece of audio playback equipment in order to modify it.

10. A method according to any one of claims 1 to 9, wherein the action consists in causing the selected piece of audio playback equipment to play an audio stream.

11. A method according to any one of claims 1 to 10, including an additional step of storing the user's selection.

12. A method according to any one of claims 1 to 11, including an additional step of the piece of audio playback equipment displaying a temporary light pattern (2) while it is being selected by the user and prior to the user validating the selection.

13. A piece of audio playback equipment including a light-emitting identification interface for performing at least the step of displaying the light pattern of the method according to any one of claims 1 to 12.

14. A piece of equipment according to claim 13, wherein the light-emitting identification interface comprises at least two LEDs.

15. A piece of equipment according to claim 13 or claim 14, wherein the light-emitting identification interface is arranged on a top face of the piece of audio playback equipment.

16. An installation including a piece of audio playback equipment according to any one of claims 13 to 15, the appliance also including an appliance comprising a graphics control interface of at least said piece of audio playback equipment.

17. An installation according to claim 16, wherein the appliance is a mobile telephone or a tablet or a computer.

18. A computer program including instructions for executing the method according to any one of claims 1 to 12.

19. A computer readable storage medium storing the computer program according to claim 18.
